# EUROPEAN PATENT APPLICATION

(11) **EP 4 618 177 A1**
(43) Date of publication of application: **17.09.2025**
(21) Application number: 24829954.7
(22) Date of filing: 12.03.2024
(51) Int. Cl.: H01M 4/13, H01M 4/139, H01M 10/0525

(54) **ELECTRODE SHEET PROCESSING SYSTEM, ELECTRODE SHEET TREATMENT METHOD, ELECTRODE SHEET, BATTERY AND ELECTRICAL APPARATUS**

(30) Priority: 29.06.2023 CN 202310783837
(71) Applicant: Contemporary Amperex Technology Co., Limited, Ningde, Fujian 352100 (CN)
(72) Inventor: ZHANG, Zhenxu, Ningde, Fujian 352100 (CN); LIU, Huihui, Ningde, Fujian 352100 (CN); XING, Qi, Ningde, Fujian 352100 (CN); ZHANG, Xinhui, Ningde, Fujian 352100 (CN)
(74) Representative: Behr, Wolfgang
(86) International application number: PCT/CN2024/081214
(87) International publication number: WO 2025/001301

(57) **Abstract**

This application pertains to the field of battery technology and particularly relates to an electrode plate processing system, a method for processing an electrode plate, an electrode plate, a battery, and an electric apparatus. The electrode plate processing system includes a flame heating unit, where the flame heating unit is configured to perform flame heating treatment on an electrode plate. The method for processing an electrode plate includes: performing flame heating treatment on an electrode plate, such that a surface layer temperature of an active layer is greater than or equal to a softening temperature or a melting temperature of a binder and less than the lowest temperature of a decomposition temperature, an oxidation temperature, and an ignition temperature of an active material. During the flame heating treatment, a binder that floats to a surface of the electrode plate can be softened (melted) or ablated. After the floating binder is softened (melted) or ablated, the number of capillary pores in the electrode plate increases, increasing channels in the electrode plate for electrolyte infiltration, making it easier for an electrolyte to infiltrate the electrode plate, thereby improving the electrolyte infiltration for the electrode plate.

## Description

This application claims priority to Chinese Patent Application No. 202310783837.7, filed on June 29, 2023 and entitled "ELECTRODE PLATE PROCESSING SYSTEM, METHOD FOR PROCESSING ELECTRODE PLATE, ELECTRODE PLATE, BATTERY, AND ELECTRIC APPARATUS", which is incorporated herein by reference in its entirety.

### TECHNICAL FIELD

This application pertains to the field of battery technology and particularly relates to an electrode plate processing system, a method for processing an electrode plate, an electrode plate, a battery, and an electric apparatus.

### BACKGROUND

With the development of the new energy industry, battery research has become increasingly prominent, and market demands continue to rise. However, batteries still have numerous issues urgently need to be addressed, such as poor electrolyte infiltration for electrode plates.

In cases where the electrolyte infiltration for electrode plates is poor, electrode plates not infiltrated by the electrolyte are less likely to participate in the electrochemical reactions of the battery, reducing the number of ions that can freely conduct between positive and negative electrodes, thereby affecting the charge-discharge capacity of the battery. Additionally, when electrode plates cannot participate in the electrochemical reactions, the interfacial resistance of the battery increases, affecting the rate performance, discharge capacity, cycling performance, and the like of the battery. Therefore, the electrolyte infiltration for electrode plates is critical to various electrochemical properties of the battery, such as the charge-discharge capacity, rate performance, and cycling performance. Improving the electrolyte infiltration for electrode plates is of significant importance for improving battery performance.

### SUMMARY

In view of the above issues, this application provides an electrode plate processing system, a method for processing an electrode plate, an electrode plate, a battery, and an electric apparatus, capable of improving the electrolyte infiltration for the electrode plate.

According to a first aspect, this application provides an electrode plate processing system including a flame heating unit, where the flame heating unit is configured to perform flame heating treatment on an electrode plate.

The electrode plate processing system of embodiments of this application performs flame heating treatment on the electrode plate by providing the flame heating unit. During the flame heating treatment, a binder that floats to a surface of the electrode plate can be softened (melted) or ablated. After the floating binder is softened (melted) or ablated, the number of capillary pores in the electrode plate increases, increasing channels in the electrode plate for electrolyte infiltration, making it easier for the electrolyte to infiltrate the electrode plate, thereby improving the electrolyte infiltration for the electrode plate.

Additionally, the electrode plate processing system of the embodiments of this application can be integrated into the existing electrode plate production line by simply adding the flame heating unit to the existing electrode plate production line, without requiring a large amount of additional time or equipment for production line modifications, offering significant cost advantages.

In some embodiments, the flame heating unit generates flames positioned on two opposite sides of a surface of the electrode plate. This allows two opposite surfaces of the electrode plate to undergo flame heating treatment, enabling binders on two surfaces to be softened (melted) or ablated, which is conducive to improving the processing efficiency of the electrode plate.

In some embodiments, the flame heating unit includes a flameless gas burner. In the embodiments of this application, the flameless gas burner is disposed in the flame heating unit, which not only facilitates rapid heating of the electrode plate, but also mitigates the reduction of the surface porosity of the electrode plate due to carbon deposition on the surface of the electrode plate during the flame heating treatment. This helps enhance the overall capillary pore distribution in the electrode plate, further accelerating the electrolyte infiltration rate of the electrode plate.

In some embodiments, the electrode plate processing system further includes a transfer unit, where the transfer unit is configured to transfer the electrode plate. Under the action of the transfer unit, the electrode plate sequentially enters the flame heating unit and other processes for processing, enabling continuous and uninterrupted operation. Moreover, an operating speed of the transfer unit is adjusted, so that the electrode plate can be adjusted to rapidly pass through the flames generated by the flame heating unit, achieving rapid heating of the electrode plate and facilitating the improvement of the processing efficiency.

According to a second aspect, this application provides a method for processing an electrode plate, where the electrode plate includes an active layer, and the active layer includes an active material and a binder; and the method for processing an electrode plate includes: performing flame heating treatment on the electrode plate, such that a surface layer temperature of the active layer is greater than or equal to a softening temperature or a melting temperature of the binder and less than the lowest temperature of a decomposition temperature, an oxidation temperature, and an ignition temperature of the active material.

In the method of embodiments of this application, a flame heating method is used to process the electrode plate, and the temperature of the active layer during the flame heating treatment is controlled, so that the binder that floats to the surface of the electrode plate can be softened (melted) or ablated. After the floating binder is softened (melted) or ablated, the number of capillary pores in the electrode plate increases, increasing channels in the electrode plate for electrolyte infiltration, making it easier for the electrolyte to infiltrate the electrode plate, thereby improving the electrolyte infiltration for the electrode plate.

Meanwhile, during the flame heating treatment, the temperature of the active layer is less than the lowest temperature of the decomposition temperature, oxidation temperature, and ignition temperature of the active material, which can reduce decomposition, oxidation, or combustion of the active material during the flame heating treatment, maintaining the lattice stability of the active material and the structural stability of the electrode plate.

In some embodiments, the flame used in the flame heating treatment includes a premixed combustion flame. In the embodiments of this application, the premixed combustion flame is used for the flame heating treatment of the electrode plate, which not only facilitates rapid heating of the electrode plate, but also mitigates the reduction of the surface porosity of the electrode plate due to carbon deposition on the surface of the electrode plate during the flame heating treatment. This helps enhance the overall capillary pore distribution in the electrode plate, further accelerating the electrolyte infiltration rate of the electrode plate.

In some embodiments, a temperature of the premixed combustion flame is 500-1200°C, optionally 600-1000°C. Using a high-temperature flame for the flame heating treatment enables the electrode plate to be rapidly heated to the required temperature.

In some embodiments, the premixed combustion flame is generated by a flameless gas burner, where the flameless gas burner includes any one or more of the following technical parameters:
(1) an air flow rate of 50-250 L/min, optionally 80-150 L/min;
(2) a gas fuel flow rate of 2-15 L/min, optionally 5-10 L/min; and
(3) an air-fuel ratio of 1-7, optionally 3-5.

In the embodiments of this application, the flameless gas burner is used to generate a premixed combustion flame, enabling the active layer to be rapidly heated to the required temperature. Meanwhile, under the specified air flow rate, gas fuel flow rate, and air-fuel ratio, the gas fuel can combust fully, producing flames with fewer free carbon particles and lower flame blackness, thereby mitigating the reduction of the surface porosity of the electrode plate due to carbon deposition on the surface of the electrode plate during the flame heating treatment.

In some embodiments, during the flame heating treatment step, the electrode plate moves relative to the flame. Through movement, the residence time of the electrode plate in the flame can be adjusted, achieving rapid and instantaneous heating of the electrode plate and facilitating the improvement of the processing efficiency. Additionally, since the flame has a high temperature, controlling the movement of the electrode plate relative to the flame can reduce the contact time between the flame and the electrode plate, controlling the electrode plate temperature within an appropriate range.

In some embodiments, the movement speed of the electrode plate relative to the flame is 40-100 m/min, optionally 60-80 m/min. In the embodiments of this application, the electrode plate moves rapidly relative to the flame, resulting in a short residence time of the electrode plate in the flame, achieving rapid and instantaneous heating of the electrode plate and controlling the temperature of the active layer of the electrode plate during the flame heating treatment within the required range.

In some embodiments, the surface layer temperature of the active layer is 180-500°C, optionally 300-500°C. These temperature ranges are greater than or equal to the softening or melting temperatures of common electrode plate binders and less than the lowest temperature of decomposition temperatures, oxidation temperatures, or ignition temperatures of common electrode plate active materials, enabling the binder that floats to the surface of the electrode plate to be effectively softened (melted) or ablated, mitigating decomposition, oxidation, or combustion of the active material during the flame heating treatment, and maintaining the lattice stability of the active material and the structural stability of the electrode plate.

According to a third aspect, this application provides an electrode plate, where a porosity of the electrode plate is 300/0-50%, optionally 300/0-47%.

The electrode plate provided by embodiments of this application has a high porosity, which is conducive to increasing channels for electrolyte infiltration for the electrode plate, making it easier for the electrolyte to infiltrate the electrode plate, thereby improving the electrolyte infiltration for the electrode plate.

In some embodiments, the electrode plate includes any one or more of the following technical parameters:
(1) an electrolyte absorption velocity of 0.3 µg/s-12 µg/s;
(2) a sheet resistance of 0.001 Ω-0.43 Ω; and
(3) adhesion strength of 18-23 N/m.

The electrode plate provided by the embodiments of this application has a high electrolyte absorption velocity, low sheet resistance, and good adhesion strength.

In some embodiments, the electrode plate includes a positive electrode plate, where the positive electrode plate has a porosity of 350/0-50%, an electrolyte absorption velocity of 0.3 µg/s-0.5 µg/s, a sheet resistance of 0.0016 Ω-0.002 Ω, and adhesion strength of 18-20 N/m; or
the electrode plate includes a negative electrode plate, where the negative electrode plate has a porosity of 300/0-35%, an electrolyte absorption velocity of 9 µg/s-12 µg/s, a sheet resistance of 0.39 Ω-0.43 Ω, and adhesion strength of 20-23 N/m.

Selecting and combining the porosity, electrolyte absorption velocity, sheet resistance, and adhesion strength of the positive electrode plate and the negative electrode plate enable the positive electrode plate and the negative electrode plate to be well used in batteries.

In some embodiments, the electrode plate is obtained by processing through the method for processing an electrode plate according to the second aspect of this application. After flame heating treatment, the binder that floats to the surface of the electrode plate is softened (melted) or ablated, exposing more capillary pores in the electrode plate. Consequently, the processed electrode plate has a high porosity, which is conducive to increasing channels for electrolyte infiltration for the electrode plate, making it easier for the electrolyte to infiltrate the electrode plate, thereby improving the electrolyte infiltration for the electrode plate.

According to a fourth aspect, this application provides a battery, where the battery includes the electrode plate according to the third aspect of this application.

The battery of embodiments of this application includes the above-described electrode plate, where the electrode plate may be a positive electrode plate, a negative electrode plate, or both a positive electrode plate and a negative electrode plate. Since a floating binder of the electrode plate in the battery is softened (melted) or ablated, the electrode plate has a higher porosity, facilitating the improvement of electrolyte infiltration for the electrode plate, thereby helping improve the electrochemical performance of the battery.

According to a fifth aspect, this application provides an electric apparatus, where the electric apparatus includes the battery according to the fourth aspect.

The battery disclosed in the embodiments of this application can be used in electric apparatuses using batteries as power sources or in various energy storage systems using batteries as energy storage elements to provide electrical energy. Electric apparatuses may include but are not limited to mobile phones, tablet computers, notebook computers, electric toys, electric tools, electric bicycles, electric vehicles, ships, and spacecraft. Electric toys may include fixed or mobile electric toys, such as game consoles, electric toy cars, electric toy ships, and electric toy airplanes. Spacecraft may include airplanes, rockets, space shuttles, spaceships, and the like. For the electric apparatus, battery cells, battery modules, or battery packs in secondary batteries can be selected based on usage requirements.

### BRIEF DESCRIPTION OF DRAWINGS

To describe the technical solutions of the embodiments of this application more clearly, the following briefly describes the accompanying drawings required for describing the embodiments or the prior art. Apparently, the accompanying drawings in the following descriptions show merely some embodiments of this application, and persons of ordinary skill in the art may still derive other accompanying drawings from the accompanying drawings without creative efforts.
FIG. 1 is a schematic structural diagram of an electrode plate processing system provided in Example A1 of this application;
FIG. 2 is a schematic diagram of a battery module according to an embodiment of this application;
FIG. 3 is a schematic diagram of a battery pack according to an embodiment of this application;
FIG. 4 is an exploded view of the battery pack according to the embodiment of this application shown in FIG. 3;
FIG. 5 is a schematic diagram of a battery according to an embodiment of this application;
FIG. 6 is an exploded view of the battery according to the embodiment of this application shown in FIG. 5; and
FIG. 7 is a schematic diagram of an electric apparatus using a battery as a power source according to an embodiment of this application.

### Reference signs:

10. electrode plate; 20. transfer unit; 21. unwinding guide roller; 22. winding guide roller; 30. flame heating unit; D. electrode plate transferring direction; 1. battery pack; 2. upper box body; 3. lower box body; 4. battery module; 5. battery cell; 51. housing; 52. electrode assembly; and 53. cover plate.

### DESCRIPTION OF EMBODIMENTS

The following describes in detail embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, meanings of all technical and scientific terms used in this specification are the same as those commonly understood by persons skilled in the art of this application. The terms used in the specification of this application are intended to merely describe the specific embodiments rather than to limit this application. The terms "comprise", "include", "have", and any variations thereof in the specification and claims of this application as well as the foregoing description of the accompanying drawings are intended to cover non-exclusive inclusions.

In the description of the embodiments of this application, technical terms such as "first" and "second" are used only to distinguish different objects and should not be understood as indicating or implying relative importance or implicitly indicating the number, specific order, or primary-secondary relationship of the technical features indicated. In the description of the embodiments of this application, "a plurality of" means two or more, unless otherwise explicitly and specifically limited.

In this specification, reference to "embodiment" means that specific features, structures, or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that some embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification typically indicates an "or" relationship between the contextually associated objects.

In the description of the embodiments of this application, the term "at least one" refers to one or more, and "a plurality of" refers to two or more. "At least one of the following" or similar expressions refer to any combination of these items, including any combination of single or plural items. For example, "at least one of a, b, or c" or "at least one of a, b, and c" may represent: a, b, c, a-b (indicating a and b), a-c, b-c, or a-b-c, where a, b, and c may each be single or plural.

It should be understood that in the various embodiments of this disclosure, the sequence numbers of the above processes do not imply the order of execution. The execution sequence of the steps/processes should be determined based on their functions and intrinsic logics, and should not constitute any limitation on the implementation process of the embodiments of this disclosure.

Masses of related components mentioned in the specification of the embodiments of this application may not only refer to the specific amount of each component but also represent the proportional relationship between the masses of the components. Therefore, any amount of the relevant components scaled up or down in accordance with the specification of the embodiments of this application falls within the scope of this application. Specifically, the mass described in the specification of the embodiments of this application may be mass units commonly known in the chemical field, such as µg, mg, g, and kg.

With the development of the new energy industry, battery research has become increasingly prominent, and market demands continue to rise. However, batteries still have numerous issues urgently need to be addressed, such as poor infiltration for electrode plates.

In cases where the electrolyte infiltration for electrode plates is inadequate, electrode plates not infiltrated by the electrolyte are less likely to participate in the electrochemical reactions of the battery, reducing the number of ions that can freely conduct between positive and negative electrodes, thereby affecting the charge-discharge capacity of the battery. Additionally, when electrode plates cannot participate in the electrochemical reactions, the interfacial resistance of the battery increases, affecting the rate performance, discharge capacity, cycling performance, and the like of the battery. Therefore, the electrolyte infiltration for electrode plates is critical to various electrochemical properties of the battery, such as the charge-discharge capacity, rate performance, and cycling performance.

Through analysis, the electrolyte infiltration for an electrode plate is influenced by various factors in the electrode plate processing process. For example, energy density is an important indicator of a battery; and a higher energy density indicates more electrical energy released by the battery. To increase the energy density of the battery, a thick coating method can be used to manufacture the electrode plate of the battery. That is, during the preparation of the electrode plate, a proportion of an active material relative to a current collector is increased, that is, a coating amount of an electrode plate slurry is increased. However, increasing the coating amount of the electrode plate slurry also leads to an increase in the thickness of the electrode plate, easily reducing the electrolyte infiltration rate of the electrode plate.

Meanwhile, a thick coating method for an electrode plate results in an increase in the thickness of the electrode plate, which does not align with market demands for portability and small size of the battery. Therefore, during the electrode plate manufacturing process, it is often necessary to maximize a compacted density of the electrode plate. However, this compresses pores between active materials in the electrode plate, making it difficult for the electrolyte to infiltrate the electrode plate. Furthermore, in the electrode plate manufacturing process, after the electrode plate slurry is applied onto the current collector, processes such as drying are often required to remove a solvent in the electrode plate slurry to form a stable electrode plate. During the drying process, the solvent in the electrode plate slurry migrates to a surface of the electrode plate through capillary forces and evaporates. Common binders, which are lightweight and have a large specific surface area, easily migrate to the surface of the electrode plate along with the evaporation of the solvent, leading to the issue that the binder floats. The floating binder blocks the pores of the electrode plate, preventing the electrolyte from penetrating the capillary pores of the electrode plate, thereby reducing the electrolyte infiltration rate of the electrode plate and affecting various electrochemical properties of the battery.

To improve the electrolyte infiltration for an electrode plate, in embodiments of this application, a flame heating unit capable of generating flames is disposed in an electrode plate processing system to perform flame heating treatment on the electrode plate. Alternatively, in a method for processing an electrode plate, a step of performing flame heating treatment on the electrode plate is included. During the flame heating treatment, a binder that floats to a surface of the electrode plate can be softened (melted) or ablated. After the floating binder is softened (melted) or ablated, exposing capillary pores in the electrode plate, increasing channels for electrolyte infiltration for the electrode plate, making it easier for the electrolyte to infiltrate the electrode plate, thereby improving the electrolyte infiltration for the electrode plate. Additionally, the method of the embodiments of this application offers significant effectiveness and cost advantages.

The electrode plate heating system or electrode plate processing method disclosed in the embodiments of this application can be used to produce high-performance positive electrode plates or negative electrode plates, with broad applicability. Moreover, the produced electrode plates can be used in batteries and electric apparatuses using batteries as power sources. Electric apparatuses may include but are not limited to mobile phones, tablet computers, notebook computers, electric toys, electric tools, electric bicycles, electric vehicles, ships, and spacecraft. Electric toys may include fixed or mobile electric toys, such as game consoles, electric toy cars, electric toy ships, and electric toy airplanes. Spacecraft may include airplanes, rockets, space shuttles, spaceships, and the like.

The following further describes this application with reference to the embodiments, and these embodiments are merely intended to illustrate this application but not to limit the scope of this application.

According to a first aspect, embodiments of this application provide an electrode plate processing system including a flame heating unit, where the flame heating unit is configured to perform flame heating treatment on an electrode plate.

An electrode plate processing system refers to process equipment used for manufacturing electrode plates and processing electrode plates. Flame heating is a method that uses flames to burn a sample, causing the temperature of the sample to rise.

The electrode plate processing system of the embodiments of this application performs flame heating treatment on the electrode plate by including the flame heating unit. During the flame heating treatment, a binder that floats to a surface of the electrode plate can be softened (melted) or ablated. After the floating binder is softened (melted) or ablated, the number of capillary pores in the electrode plate increases, increasing channels in the electrode plate for electrolyte infiltration, making it easier for the electrolyte to infiltrate the electrode plate, thereby improving the electrolyte infiltration for the electrode plate.

Additionally, the electrode plate processing system of the embodiments of this application can be integrated into an existing electrode plate production line by simply adding the flame heating unit to the existing electrode plate production line, without requiring a large amount of additional time or equipment for production line modification, offering significant cost advantages.

In some embodiments, the flame heating unit generates flames positioned on two opposite sides of a surface of the electrode plate. This allows both surfaces of the electrode plate to undergo flame heating treatment, enabling the binder on both surfaces to be softened (melted) or ablated, which is conducive to improving the processing efficiency of the electrode plate.

In some embodiments, the flame heating unit includes a flameless gas burner.

A gas burner is a device that converts gas fuel into thermal energy through combustion. Depending on the difference of combustion flame, gas burners can be classified into flame gas burners and flameless gas burners. Flame gas burners produce flames with strong light radiation, operating on the principle of gas diffusion combustion. In contrast, flameless gas burners produce flames with weaker light radiation, operating on the principle of gas premixed combustion (in actual flameless gas burners, there is partial diffusion combustion, that is, the operating principle involves partial premixed combustion).

Gas diffusion combustion and gas premixed combustion are two different combustion modes for gases. In gas diffusion combustion, a gas fuel and an oxidizer (air or oxygen) do not contact each other before ignition and are separately fed into a combustion chamber for combustion. For example, the combustion of torches, kerosene lamps, alcohol lamps, and the like belongs to gas diffusion combustion. Gas diffusion combustion has disadvantages such as poor combustion stability and low heat release rate. Additionally, since the gas fuel and the oxidizer do not contact each other before ignition, combustion is incomplete, producing carbon particles, thus easily forming carbon deposition on a surface of a sample subjected to flame heating treatment.

Gas premixed combustion refers to that the gas fuel and the oxidizer have been mixed and contacted each other before ignition, with combustion occurring after the gas is premixed. Gas premixed combustion has advantages such as high thermal intensity and high combustion temperatures. Controlling the amount of the oxidizer in the premix allows the gas fuel to combust completely, reducing soot produced during combustion. Additionally, gas premixed combustion has the characteristic of fast combustion speed, where hydrocarbons in the gas fuel do not have time to decompose, resulting in fewer free carbon particles in the flame and lower flame blackness.

Therefore, in the embodiments of this application, the flameless gas burner is disposed in the flame heating unit, which not only facilitates rapid heating of the electrode plate, but also mitigates the reduction of the surface porosity of the electrode plate due to carbon deposition on the surface of the electrode plate during the flame heating treatment. This helps enhance the overall capillary pore distribution in the electrode plate, further accelerating the electrolyte infiltration rate of the electrode plate.

For example, the flameless gas burner in the embodiments of this application includes an injection-type gas burner, that is, a torch burner.

In some embodiments, the gas fuel used by the flameless gas burner includes one or more of natural gas, hydrogen, carbon monoxide, methane, ethane, ethylene, propylene, acetylene, and propyne. These gas fuels have advantages such as high thermal intensity and high combustion temperatures during combustion, enabling rapid flame heating of the electrode plate.

In some embodiments, the electrode plate processing system further includes a transfer unit, where the transfer unit is configured to transfer the electrode plate.

Under the action of the transfer unit, the electrode plate sequentially enters the flame heating unit and other processes for processing, enabling continuous and uninterrupted operation. The transfer unit may include an unwinding guide roller and a winding guide roller that are arranged in sequence and used for unwinding and winding the electrode plate, respectively. Placing the electrode plate on the unwinding guide roller and the winding guide roller and operating the winding guide roller allow the electrode plate to move relative to the flame heating unit under the traction of the winding guide roller. The operating speed of the winding guide roller may be set to 40-100 m/min, optionally 60-80 m/min, including but not limited to any point value of 40 m/min, 45 m/min, 50 m/min, 55 m/min, 60 m/min, 65 m/min, 70 m/min, 75 m/min, 80 m/min, 85 m/min, 90 m/min, 95 m/min, 100 m/min, or a value in a range defined by any two of these values; or the operating speed of the winding guide roller is set to be other operating speeds based on the actual needs. The operating speed of the transfer unit is adjusted, so that the electrode plate can be adjusted to rapidly pass through the flames generated by the flame heating unit, achieving rapid heating of the electrode plate and facilitating the improvement of the processing efficiency.

In some embodiments, the electrode plate processing system further includes a temperature measurement unit, where the temperature measurement unit is configured to measure a temperature of the electrode plate. The temperature measurement unit is provided, so that the temperature of the electrode plate can be monitored timely and accurately, and the state of the electrode plate can be monitored. The temperature measurement unit can be used to measure a surface temperature of the electrode plate, measure an internal temperature of the electrode plate, or measure the surface temperature and internal temperature of the electrode plate simultaneously. Additionally, the temperature measurement unit can be used to measure the temperature of the electrode plate during the flame heating treatment or the temperature of the electrode plate after flame heating treatment. For example, the temperature measurement unit can be used to measure the temperature of the electrode plate 3-10 cm (for example, any point value of 3 cm, 4 cm, 5 cm, 6 cm, 7 cm, 8 cm, 9 cm, 10 cm, or a value in a range defined by any two of these values) downstream of a region heated by flame.

In some embodiments, the temperature measurement unit includes an infrared temperature measurement module. An infrared temperature measurement method can satisfy non-contact temperature measurement of the electrode plate.

In some embodiments, the electrode plate processing system further includes an automatic temperature control unit, where the automatic temperature control unit is configured to control heating conditions of the flame heating unit, such as controlling the gas fuel flow rate and air flow rate in the flame heating unit. The automatic temperature control unit can receive temperature data of the electrode plate measured by the temperature measurement unit and control the flame heating unit based on this temperature data to precisely and effectively soften (melt) or ablate the binder that floats to the electrode plate, reducing adverse effects on other components of the electrode plate.

In some embodiments, the electrode plate processing system further includes a drying unit, where the drying unit is configured to perform drying treatment on an electrode plate coated with an electrode slurry, and the drying unit and the flame heating unit are arranged sequentially along an electrode plate transferring direction. The electrode plate coated with the electrode slurry refers to an electrode plate provided with a wet film and formed by applying the electrode slurry onto a current collector (typically on one or both surfaces of the current collector), where the electrode slurry is not dried and still contains a solvent. The drying unit and the flame heating unit being arranged sequentially along the electrode plate transferring direction means that the electrode plate passes through the drying unit before passing through the flame heating unit. After treatment by the drying unit, the binders in the electrode slurry floats to the surface of the electrode plate, affecting the structure of the electrode plate. Thus, the treatment by the flame heating unit can soften (melt) or ablate the floating binders.

In some embodiments, the electrode plate processing system further includes a rolling unit, where the rolling unit is configured to perform rolling treatment on the electrode plate, and the rolling unit and the flame heating unit are arranged sequentially along the electrode plate transferring direction; or the drying unit, the rolling unit, and the flame heating unit are arranged sequentially along the electrode plate transferring direction. Rolling methods typically include cold rolling, hot rolling, and the like. Rolling can enhance the internal adhesion strength of the electrode plate and allow the electrode plate to have the required compacted density.

In some embodiments, the electrode plate processing system further includes a cooling unit, where the cooling unit is configured to perform cooling treatment on the electrode plate, and the flame heating unit and the cooling unit are arranged sequentially along the electrode plate transferring direction. After the flame heating unit processes the electrode plate, the electrode plate typically needs to be wound. A high electrode plate temperature is not conducive to winding. Therefore, cooling the electrode plate with the cooling unit can reduce the electrode plate temperature, facilitating subsequent winding of the electrode plate.

According to a second aspect, embodiments of this application provide a method for processing an electrode plate, where the electrode plate includes an active layer, and the active layer includes an active material and a binder; and the method for processing an electrode plate includes: performing flame heating treatment on the electrode plate, such that a surface layer temperature of the active layer is greater than or equal to a softening temperature or a melting temperature of the binder and less than the lowest temperature of a decomposition temperature, an oxidation temperature, and an ignition temperature of the active material.

The active material is a material in the electrode plate that participates in the electrochemical reactions of the battery and serves as a medium for ion transport in the electrochemical reactions. The binder is a polymer compound used to bind various components in the active layer (for example, the active material and other materials) and a current collector, primarily providing adhesion and maintaining the stability of the active material within the active layer, enhancing the bonding strength between the active layer and the current collector. The binder, the active material, a solvent, and other necessary components are mixed to form a slurry, and the slurry is applied onto at least one side of the current collector. After the solvent evaporates, the slurry is dried to form the active layer of the electrode plate.

In the embodiments of this application, the surface layer of the active layer refers to an outermost layer of the active layer in contact with the external environment. Typically, the electrode plate includes a current collector and an active layer disposed on at least one side of the current collector, so the surface layer of the active layer is typically also a surface layer of the electrode plate. Typically, a region within a thickness being 40% of the thickness of the electrode plate, from outside to inside along a thickness direction of the electrode plate, can be considered as a surface layer of the electrode plate. For example, for a common electrode plate with a thickness of 50-300 µm, a region with a thickness of 0-20 µm (from outside to inside along a thickness direction of the electrode plate) can be considered as a surface layer of the electrode plate, that is, the surface layer of the active layer. In the active layer, a region other than the surface layer of the active layer can be considered as the interior of the active layer. During the flame heating treatment, the surface layer temperature of the active layer may refer to a temperature of a region of the surface layer of the active layer being heated by the flame or a temperature of a region of the surface layer of the active layer downstream of a region heated by flame, for example, a temperature of a region 3-10 cm (for example, any point value of 3 cm, 4 cm, 5 cm, 6 cm, 7 cm, 8 cm, 9 cm, 10 cm, or a value in a range defined by any two of these values) downstream of the region heated by flame. This region is close to a region heated by flame, and its temperature may typically be considered to be the same as the surface layer temperature of the active layer during the flame heating treatment.

The softening temperature is a temperature at which a three-dimensional long-range ordered state of a macromolecular chain structure of an amorphous polymer transitions to a disordered viscous flow state. The melting temperature is a temperature at which a three-dimensional long-range ordered state of a macromolecular chain structure of a crystalline polymer transitions to a disordered viscous flow state, also known as a melting point which is the lower limit of a processing temperature for the crystalline polymer. Typically, a melting temperature range is relatively narrow, while a softening temperature range is relatively broad.

The decomposition temperature of the active material refers to a temperature at which a molecular structure of the active material is destroyed or the lattice undergoes distortion even though no combustion reaction has occurred. The oxidation temperature of the active material is the lowest temperature required for the active material to undergo an oxidation reaction. The ignition temperature of the active material, also known as a kindling temperature, is the lowest temperature at which the active material undergoes combustion.

In the method of the embodiments of this application, a flame heating method is used to process the electrode plate, and the surface layer temperature of the active layer during the flame heating treatment is controlled, so that the binder that floats to the surface of the electrode plate can be softened (melted) or ablated. After the floating binder is softened (melted) or ablated, the number of capillary pores in the electrode plate increases, increasing channels in the electrode plate for electrolyte infiltration, making it easier for the electrolyte to infiltrate the electrode plate, thereby improving the electrolyte infiltration for the electrode plate.

Meanwhile, during the flame heating treatment, the surface layer temperature of the active layer is less than the lowest temperature of the decomposition temperature, oxidation temperature, and ignition temperature of the active material, which can reduce decomposition, oxidation, or combustion of the active material during the flame heating treatment, maintaining the lattice stability of the active material and the structural stability of the electrode plate.

In some embodiments, a solvent mass concentration in the active layer is as low as the ppm level, such as below 1000 ppm. An active layer with such a low concentration is a dried active layer with a floating binder on its surface. In the embodiments of this application, performing flame heating treatment on an electrode plate with a dried active layer can process the floating binder, improving the performance of the electrode plate.

In some embodiments, the flame used in the flame heating treatment includes a premixed combustion flame.

Premixed combustion, also known as gas premixed combustion, is a combustion mode for gas fuel, and a premixed combustion flame is a flame produced by this combustion mode. Gas premixed combustion refers to that the gas fuel and the oxidizer have been mixed and contacted each other before ignition, with combustion occurring after the gas is premixed. Gas premixed combustion has advantages such as high thermal intensity and high combustion temperatures. Controlling the amount of the oxidizer in the premix allows the gas fuel to combust completely, reducing soot produced during combustion. Additionally, gas premixed combustion has the characteristic of fast combustion speed, where hydrocarbons in the gas fuel do not have time to decompose, resulting in fewer free carbon particles in the flame and lower flame blackness. Therefore, in the embodiments of this application, a premixed combustion flame is used for the flame heating treatment of the electrode plate, which not only facilitates rapid heating of the electrode plate, but also mitigates the reduction of the surface porosity of the electrode plate due to carbon deposition on the surface of the electrode plate during the flame heating treatment. This helps enhance the overall capillary pore distribution in the electrode plate, further accelerating the electrolyte infiltration rate of the electrode plate.

In some embodiments, a temperature of the premixed combustion flame is 500-1200°C, optionally 600-1000°C, including but not limited to any point value of 500°C, 550°C, 600°C, 650°C, 700°C, 750°C, 800°C, 850°C, 900°C, 950°C, 1000°C, 1050°C, 1100°C, 1150°C, 1200°C, or a value in a range defined by any two of these values. The premixed combustion flame is uniform without a distinct layering state, so the temperature of the premixed combustion flame refers to a temperature of any region of the entire flame. The temperature of the premixed combustion flame can be obtained by contact measurement using thermocouples or light, or obtained by non-contact measurement using methods such as an imaging method, a laser spectroscopy method, or a radiation method. Using a high-temperature flame for the flame heating treatment enables the electrode plate to be rapidly heated to the required temperature.

In some embodiments, the premixed combustion flame is generated by a flameless gas burner, where the flameless gas burner includes any one or more of the following technical parameters:
(1) an air flow rate of 50-250 L/min, optionally 80-150 L/min;
(2) a gas fuel flow rate of 2-15 L/min, optionally 5-10 L/min; and
(3) an air-fuel ratio of 1-7, optionally 3-5.

The air flow rate includes but is not limited to any point value of 50 L/min, 60 L/min, 70 L/min, 80 L/min, 90 L/min, 100 L/min, 110 L/min, 120 L/min, 130 L/min, 140 L/min, 150 L/min, 160 L/min, 170 L/min, 180 L/min, 190 L/min, 200 L/min, 210 L/min, 220 L/min, 230 L/min, 240 L/min, 250 L/min, or a value in a range defined by any two of these values.

The gas fuel flow rate includes but is not limited to any point value of 2 L/min, 3 L/min, 4 L/min, 5 L/min, 6 L/min, 7 L/min, 8 L/min, 9 L/min, 10 L/min, 11 L/min, 12 L/min, 13 L/min, 14 L/min, 15 L/min, or a value in a range defined by any two of these values.

The air-fuel ratio refers to a mass ratio of air to gas fuel in a mixed gas formed by premixing air and gas fuel. The air-fuel ratio includes but is not limited to any point value of 1, 2, 3, 4, 5, 6, 7, or a value in a range defined by any two of these values.

In the embodiments of this application, the flameless gas burner is used to generate a premixed combustion flame, enabling the active layer to be rapidly heated to the required temperature. Meanwhile, under the specified air flow rate, gas fuel flow rate, and air-fuel ratio, the gas fuel can combust fully, producing flames with fewer free carbon particles and lower flame blackness, thereby mitigating the reduction of the surface porosity of the electrode plate due to carbon deposition on the surface of the electrode plate during the flame heating treatment.

In some embodiments, during the flame heating treatment step, the electrode plate moves relative to the flame. Through movement, the residence time of the electrode plate in the flame can be adjusted, achieving rapid and instantaneous heating of the electrode plate and facilitating the improvement of the processing efficiency. Additionally, since the flame has a high temperature, controlling the movement of the electrode plate relative to the flame can reduce the contact time between the flame and the electrode plate, controlling the electrode plate temperature within an appropriate range.

In some embodiments, the movement speed of the electrode plate relative to the flame is 40-100 m/min, optionally 60-80 m/min, including but not limited to any point value of 40 m/min, 45 m/min, 50 m/min, 55 m/min, 60 m/min, 65 m/min, 70 m/min, 75 m/min, 80 m/min, 85 m/min, 90 m/min, 95 m/min, 100 m/min, or a value in a range defined by any two of these values. In the embodiments of this application, the electrode plate moves rapidly relative to the flame, resulting in a short residence time of the electrode plate in the flame, achieving rapid and instantaneous heating of the electrode plate and controlling the temperature of the active layer of the electrode plate during the flame heating treatment within the required range. In actual operations, the electrode plate can be placed on an unwinding guide roller and a winding guide roller, and the electrode plate is pulled by the winding guide roller to achieve movement of the electrode plate relative to the flame. Controlling traveling speed speeds on the unwinding guide roller and the winding guide roller can adjust the movement speed of the electrode plate relative to the flame.

In some embodiments, during the flame heating treatment step, the surface layer temperature of the active layer is 180-500°C, optionally 300-500°C, including but not limited to any point value of 180°C, 200°C, 250°C, 300°C, 350°C, 400°C, 450°C, 500°C, or a value in a range defined by any two of these values. The surface layer temperature of the active layer can be measured using an infrared temperature measurement module or other temperature testing instruments. These temperature ranges are greater than or equal to softening or melting temperatures of common electrode plate binders and less than the lowest temperature of decomposition temperatures, oxidation temperatures, or ignition temperatures of common electrode plate active materials, enabling the binder that floats to the surface of the electrode plate to be effectively softened (melted) or ablated, mitigating decomposition, oxidation, or combustion of the active material during the flame heating treatment, and maintaining the lattice stability of the active material and the structural stability of the electrode plate.

In some embodiments, before the flame heating treatment, a porosity of the electrode plate is 25%-32%, including but not limited to any point value of 25%, 26%, 27%, 28%, 29%, 30%, 31%, 32%, or a value in a range defined by any two of these values. Typically, a positive electrode plate and a negative electrode plate have different porosities due to differences in densities and particle sizes of active materials, the types of binder used, or other factors. For a positive electrode plate, the porosity before flame heating treatment may be 300/0-32%, including but not limited to any point value of 30%, 31%, 32%, or a value in a range defined by any two of these values. For a negative electrode plate, the porosity before flame heating treatment may be 25%-28%, including but not limited to any point value of 25%, 26%, 27%, 28%, or a value in a range defined by any two of these values. The porosity of the electrode plate can be calculated using the apparent volume and true volume of the electrode plate, that is, the porosity is equal to (V₀-V)/V * 100%, where V₀ is the apparent volume of the electrode plate, and V is the true volume of the electrode plate. The method of the embodiments of this application is suitable for processing electrode plates with different porosities, and the flame heating treatment can increase the porosity of the electrode plate, thereby improving the electrolyte infiltration for the electrode plate.

In some embodiments, before the flame heating treatment, a sheet resistance of the electrode plate is 0.001-0.5 Ω, including but not limited to any point value of 0.001 Ω, 0.002 Ω, 0.005 Ω, 0.01 Ω, 0.05 Ω, 0.1 Ω, 0.2 Ω, 0.3 Ω, 0.4 Ω, 0.5 Ω, or a value in a range defined by any two of these values. Typically, a positive electrode plate and a negative electrode plate have different sheet resistances. For a positive electrode plate, the sheet resistance before flame heating treatment is typically 0.001-0.01 Ω, including but not limited to any point value of 0.001 Ω, 0.002 Ω, 0.005 Ω, 0.01 Ω, or a value in a range defined by any two of these values. For a negative electrode plate, the sheet resistance before flame heating treatment is typically 0.1-0.5 Ω, including but not limited to any point value of 0.1 Ω, 0.2 Ω, 0.3 Ω, 0.4 Ω, 0.5 Ω, or a value in a range defined by any two of these values. The sheet resistance of the electrode plate can be directly tested using a sheet resistance meter. The method of the embodiments of this application is suitable for processing electrode plates with different sheet resistances, and the flame heating treatment can improve the structure of the electrode plate, such as increasing the porosity. This is conducive to reducing the sheet resistance of the electrode plate.

In some embodiments, before the flame heating treatment, the adhesion strength of the electrode plate is 18-23 N/m, including but not limited to any point value of 18 N/m, 19 N/m, 20 N/m, 21 N/m, 22 N/m, 23 N/m, or a value in a range defined by any two of these values. Typically, a positive electrode plate and a negative electrode plate have different adhesion strengths due to differences in the types of binders used or other factors. For a positive electrode plate, the adhesion strength before flame heating treatment may be 18-20 N/m, including but not limited to any point value of 18 N/m, 19 N/m, 20 N/m, or a value in a range defined by any two of these values. For a negative electrode plate, the adhesion strength before flame heating treatment may be 20-23 N/m, including but not limited to any point value of 20 N/m, 21 N/m, 22 N/m, 23 N/m, or a value in a range defined by any two of these values. The adhesion strength of the electrode plate reflects the bonding strength between an active material, a binder, a conductive agent, a current collector, and other components in the electrode plate. The electrode plate is bonded to a surface of a substrate, a tensile test is performed on the electrode plate using a tensile machine, and a displacement and an acting force during a process where the electrode plate is completely peeled from the substrate are recorded, to obtain a force at equilibrium. The force is typically considered as the adhesion strength of the electrode plate. The method of the embodiments of this application is suitable for processing electrode plates with different adhesion strengths, and after the flame heating treatment, the adhesion strength of the electrode plate is improved or maintained at a comparable level. That is, the electrode plate after the flame heating treatment still has good adhesion strength, meeting the requirements.

In some embodiments, the binder includes one or more of an oil-soluble binder, a water-soluble binder, and an emulsion-type binder. The oil-soluble binder includes but is not limited to one or more of polyvinylidene fluoride (PVDF), polyimide (PI), polytetrafluoroethylene (PTFE), polybutyl acrylate (PBA), and polyacrylonitrile (PAN). The water-soluble binder includes but is not limited to one or more of carboxymethyl cellulose (CMC), carboxymethyl cellulose salts, polyacrylic acid (PAA), polyacrylate salts, polyvinyl alcohol (PVA), sodium alginate (SA), and cyclodextrin (CD). The emulsion-type binder includes but is not limited to one or more of styrene-butadiene rubber (SBR), vinyl acetate resin, acrylic resin (EVA), and chlorinated rubber (CR). Depending on the difference in the types of active materials in the electrode plate, different binders can be selected, and the temperature during flame heating can be determined based on the softening or melting temperature of the binder.

In some embodiments, a mass percentage of the binder in the active layer includes but is not limited to 0.5%-10%, optionally 1%-5%. For example, the mass percentage of the binder is any point value of 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10% or a value in a range defined by any two of these values. Alternatively, the mass percentage of the binder may be set to another percentage based on the needs.

In some embodiments, the electrode plate includes either or both of a positive electrode plate and a negative electrode plate. Both the positive electrode plate and the negative electrode plate experience binder floatation during the drying process, and the method of the embodiments of this application is applicable to both the positive electrode plate and the negative electrode plate.

In some embodiments, the electrode plate is a positive electrode plate, and the active material includes one or more of a metallic inorganic active material and an organic active material. The metallic inorganic active material includes but is not limited to one or more of lithium iron phosphate, lithium manganese phosphate, lithium cobaltate, lithium manganate, lithium nickel cobalt manganate (a nickel cobalt manganese ternary material), and lithium nickel cobalt aluminate (a nickel cobalt aluminum ternary material). The organic active material includes but is not limited to one or more of quinone compounds, carboxylate compounds, anhydride compounds, and amide compounds.

In some embodiments, the electrode plate is a negative electrode plate, and the active material includes one or more of a carbon-based active material, a titanium-based active material, a silicon-based active material, nitride, and lithium metal. The carbon-based material includes but is not limited to one or more of graphite (natural graphite, artificial graphite), hard carbon, soft carbon, mesocarbon microbeads, and graphene. The titanium-based active material includes but is not limited to one or more of lithium titanate and titanium dioxide. The silicon-based active material includes but is not limited to one or more of silicon and silicon dioxide. Nitride includes but is not limited to lithium nitride.

In some embodiments, a mass percentage of the active material in the active layer includes but is not limited to 90%-98%, optionally 95%-98%. For example, the mass percentage of the active material is any point value of 90%, 91%, 92%, 93%, 94%, 95%, 96%, 97%, 98%, or a value in a range defined by any two of these values. Alternatively, the mass percentage of the active material may be set to another percentage based on the needs.

In some embodiments, the active layer further includes a conductive agent. The conductive agent is used to collect microcurrents between active materials and between the active material and the current collector, improving electronic conductivity; and the conductive agent can also promote electrolyte infiltration for the electrode plate.

In some embodiments, the conductive agent includes one or more of acetylene black (SP), carbon nanotubes, conductive carbon black (super-P), Ketjen black, carbon fiber, and graphene.

In some embodiments, a mass percentage of the conductive agent in the active layer includes but is not limited to 0.5%-10%, optionally 1%-5%. For example, the mass percentage of the conductive agent is any point value of 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, or a value in a range defined by any two of these values. Alternatively, the mass percentage of the conductive agent may be set to another percentage based on the needs.

In some embodiments, the active layer may optionally further include a thickener, such as carboxymethyl cellulose (CMC). A mass percentage of the thickener in the active layer includes but is not limited to 0.5%-5%, optionally 1%-5%, including but not limited to any point value of 0.5%, 1%, 1.5%, 2%, 2.5%, 3%, 3.5%, 4%, 4.5%, 5%, or a value defined by any two of these values. Alternatively, the mass percentage of the thickener may be set to another percentage based on the needs.

In some embodiments, the electrode plate further includes a current collector, and the active layer is disposed on at least one side of the current collector. The current collector on the electrode plate serves as a substrate for the attachment of the active layer and transports electrons during chemical reactions of the battery. The current collector includes but is not limited to a metallic current collector, a carbon current collector, a conductive resin current collector, and a composite current collector of metal and resin; more specifically, examples of the current collector include copper, aluminum, nickel, titanium, iron, and their respective alloys, stainless steel, carbon fiber, carbon nanotubes (CNT), graphite, and the like.

In some embodiments, before the flame heating treatment step, the method includes any one or both of a drying treatment and a rolling treatment on the electrode plate.

In the electrode plate manufacturing process, the active material, the binder, the conductive agent, the solvent, and other necessary components are typically mixed to form a slurry; then the slurry is applied onto the current collector and dried to form the active layer. During the drying process, the solvent evaporates, and the binder migrates to the surface of the active layer along with the solvent, leading to binder floatation, thus resulting in various issues detrimental to the electrochemical performance of the electrode plate.

Typically, after the drying treatment, a rolling treatment step is further included. Rolling methods typically include cold rolling, hot rolling, and the like. Rolling can enhance the internal adhesion strength of the electrode plate and allow the electrode plate to have the required compacted density. The rolling treatment step can be performed after the drying treatment step and before the flame heating treatment step.

The method of the embodiments of this application performs the flame heating treatment on the electrode plate after the drying treatment and/or the rolling treatment, addressing the issue of binder floatation during the drying process and improving the electrolyte infiltration for the electrode plate.

In some embodiments, after the flame heating treatment step, the method includes a cooling treatment step on the electrode plate. Cooling treatment methods include but are not limited to air cooling and circulating water cooling. Cooling the electrode plate can reduce the electrode plate temperature, facilitating subsequent processing of the electrode plate, such as winding of the electrode plate.

In a third aspect, embodiments of this application provide an electrode plate, where a porosity of the electrode plate is 300/0-50%, optionally 300/0-47%.

In some embodiments, an electrolyte absorption velocity of the electrode plate may be 0.3 µg/s-12 µg/s, including but not limited to any point value of 0.3 µg/s, 0.4 µg/s, 0.5 µg/s, 0.8 µg/s, 1 µg/s, 2 µg/s, 3 µg/s, 5 µg/s, 8 µg/s, 9 µg/s, 10 µg/s, 11 µg/s, 12 µg/s, or a value in a range defined by any two of these values. Specifically, for a positive electrode plate, the electrolyte absorption velocity may be 0.3 µg/s-0.5 µg/s; and for a negative electrode plate, the electrolyte absorption velocity may be 9 µg/s-12 µg/s.

In some embodiments, a sheet resistance of the electrode plate may be 0.001 Ω-0.43 Ω, including but not limited to any point value of 0.001 Ω, 0.0015 Ω, 0.0018 Ω, 0.002 Ω, 0.008 Ω, 0.01 Ω, 0.05 Ω, 0.08 Ω, 0.1 Ω, 0.2 Ω, 0.25 Ω, 0.3 Ω, 0.35 Ω, 0.38 Ω, 0.4 Ω, 0.41 Ω, 0.42 Ω, 0.43 Ω, or a value in a range defined by any two of these values. Specifically, for a positive electrode plate, the sheet resistance may be 0.0016 Ω-0.002 Ω; and for a negative electrode plate, the sheet resistance may be 0.39 Ω-0.43 Ω.

In some embodiments, adhesion strength of the electrode plate may be 18-23 N/m, including but not limited to any point value of 18 N/m, 19 N/m, 20 N/m, 21 N/m, 22 N/m, 23 N/m, or a value in a range defined by any two of these values. Specifically, for a positive electrode plate, the adhesion strength is 18-20 N/m; and for a negative electrode plate, the adhesion strength is 20-23 N/m.

In some embodiments, the electrode plate includes a positive electrode plate, where the positive electrode plate has a porosity of 350/0-50%, an electrolyte absorption velocity of 0.3 µg/s-0.5 µg/s, a sheet resistance of 0.0016 Ω-0.002 Ω, and adhesion strength of 18-20 N/m; or the electrode plate includes a negative electrode plate, where the negative electrode plate has a porosity of 300/0-35%, an electrolyte absorption velocity of 9 µg/s-12 µg/s, a sheet resistance of 0.39 Ω-0.43 Ω, and adhesion strength of 20-23 N/m.

In some embodiments, the above-described electrode plate of the embodiments of this application is obtained by processing through the method for processing an electrode plate according to the second aspect.

Due to differences in material types and amounts between a positive electrode plate and a negative electrode plate, as well as other factors, the positive electrode plate and the negative electrode plate after flame heating treatment have different porosities. Specifically, when the electrode plate is a positive electrode plate, the porosity of the positive electrode plate is 350/0-50%, including but not limited to any point value of 35%, 36%, 37%, 38%, 39%, 40%, 42%, 44%, 46%, 48%, 50%, or a value in a range defined by any two of these values.

Alternatively, when the electrode plate is a negative electrode plate, the porosity of the negative electrode plate is 300/0-35%, including but not limited to any point value of 30%, 31%, 32%, 33%, 34%, 35%, or a value in a range defined by any two of these values.

After the flame heating treatment, the binder that floats to the surface of the electrode plate is softened (melted) or ablated, exposing more capillary pores in the electrode plate. Consequently, the processed electrode plate has a high porosity, which is conducive to increasing channels in the electrode plate for electrolyte infiltration, making it easier for the electrolyte to infiltrate the electrode plate, thereby improving the electrolyte infiltration for the electrode plate.

In some embodiments, the porosity of the electrode plate of the embodiments of this application is increased by 14% or more compared to that before the flame heating treatment, for example, increased by 14%-50%, including but not limited to any point value of 14%, 16%, 18%, 20%, 22%, 24%, 26%, 28%, 30%, 32%, 34%, 36%, 38%, 40%, 42%, 44%, 46%, 48%, 50%, or a value in a range defined by any two of these values. Corresponding to the porosity, porosity change rates of the positive electrode plate and the negative electrode plate after the flame heating treatment are also different. For the positive electrode plate, the porosity is increased by 19%-50% compared to that before the flame heating treatment, optionally 40%-50%, including but not limited to any point value of 19%, 20%, 22%, 24%, 26%, 28%, 30%, 32%, 34%, 36%, 38%, 40%, 42%, 44%, 46%, 48%, 50%, or a value in a range defined by any two of these values. For the negative electrode plate, the porosity is increased by 14%-26% compared to that before the flame heating treatment, optionally 22%-26%, including but not limited to any point value of 14%, 16%, 18%, 20%, 22%, 24%, 26%, or a value in a range defined by any two of these values.

In some embodiments, the electrolyte absorption velocity of the electrode plate of the embodiments of this application for the electrolyte is increased by 18% or more compared to that before the flame heating treatment, optionally increased by 18%-100%, including but not limited to any point value of 18%, 20%, 25%, 30%, 35%, 40%, 45%, 50%, 55%, 60%, 65%, 70%, 75%, 80%, 85%, 90%, 95%, 100%, or a value in a range defined by any two of these values. Affected by different porosities, change rates of the electrolyte absorption velocities of the positive electrode plate and the negative electrode plate for the electrolyte are also different. For the positive electrode plate, the electrolyte absorption velocity for the electrolyte is increased by 34%-100% compared to that before the flame heating treatment, optionally increased by 78%-100%, including but not limited to any point value of 34%, 40%, 45%, 50%, 55%, 60%, 65%, 70%, 75%, 78%, 80%, 85%, 90%, 95%, 100%, or a value in a range defined by any two of these values. For the negative electrode plate, the electrolyte absorption velocity for the electrolyte is increased by 18%-40% compared to that before flame heating treatment, optionally increased by 34%-40%, including but not limited to any point value of 18%, 20%, 25%, 30%, 35%, 40%, or a value in a range defined by any two of these values. The electrode plate of the embodiments of this application has a high porosity, resulting in a fast absorption velocity for the electrolyte.

In some embodiments, the sheet resistance of the electrode plate of the embodiments of this application is reduced by 8% or more compared to that before the flame heating treatment, optionally reduced by 8%-30%, including but not limited to any point value of 8%, 10%, 12%, 14%, 16%, 18%, 20%, 22%, 24%, 26%, 28%, 30%, or a value in a range defined by any two of these values. Change rates of sheet resistances of different electrode plates are also different. For the positive electrode plate, the sheet resistance is reduced by 16%-30% compared to that before the flame heating treatment, optionally reduced by 25%-30%, including but not limited to any point value of 16%, 18%, 20%, 22%, 24%, 26%, 28%, 30%, or a value in a range defined by any two of these values. For the negative electrode plate, the sheet resistance is reduced by 8%-15% compared to that before the flame heating treatment, optionally reduced by 12%-15%, including but not limited to any point value of 8%, 10%, 12%, 14%, 15%, or a value in a range defined by any two of these values. After the flame heating treatment, the sheet resistance of the electrode plate is alleviated.

According to a fourth aspect, embodiments of this application provide a battery, where the battery includes the electrode plate according to the third aspect.

The battery of the embodiments of this application includes the above-described electrode plate, where the electrode plate may be a positive electrode plate or a negative electrode plate, or may include both a positive electrode plate and a negative electrode plate. Since the floating binder in the electrode plate of the battery is softened (melted) or ablated, the electrode plate has a higher porosity, facilitating the improvement of electrolyte infiltration for the electrode plate, thereby helping improve the electrochemical performance of the battery.

In some embodiments, the battery of the embodiments of this application includes one or more of a primary battery and a secondary battery. Depending on whether the battery can be recharged for reuse, batteries are classified into primary batteries and secondary batteries. Primary batteries cannot be recharged to restore after discharge, while secondary batteries can be recharged after discharge to activate the active material for continued use. The electrode plate of the embodiments of this application can be applied to both primary and secondary batteries, offering a wide application range.

In some embodiments, the battery of the embodiments of this application includes one or more of a battery cell, a battery module, and a battery pack. In a case where the battery is a secondary battery, the secondary battery is classified into a battery cell, a battery module, and a battery pack based on different packaging forms. A battery cell is the most basic unit of a secondary battery, including an electrode assembly and an electrolyte, where the electrode assembly typically includes a positive electrode plate, a negative electrode plate, and a separation member. Operation of the battery cell mainly depends on migration of metal ions in the electrolyte between the positive electrode plate and the negative electrode plate. In some battery packaging technologies, one or more battery cells can be integrated into a battery module first, and one or more battery modules are then installed in a battery box to form a battery pack. In other battery packaging technologies, one or more battery cells can be directly installed in a box to form a battery pack, eliminating the intermediate state of a battery module, thereby reducing the mass of the battery pack and increasing the energy density of the battery.

In some embodiments, the battery further includes an electrolyte. The electrolyte serves as a carrier for ion transport in the battery.

In some embodiments, the electrolyte may use a liquid electrolyte, where the liquid electrolyte may include a solvent and a lithium salt dissolved in the solvent. The electrolyte may alternatively include a solid electrolyte, such as a polymer electrolyte or an inorganic solid electrolyte, but is not limited thereto.

The solvent in the liquid electrolyte may include a non-aqueous organic solvent, for example, including one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), methyl formate (MF), methyl acetate (MA), ethyl acetate (EA), propyl acetate (PA), methyl propionate (MP), ethyl propionate (EP), propyl propionate (PP), methyl butyrate (MB), and ethyl butyrate (EB).

The lithium salt may include one or more of LiPF₆ (lithium hexafluorophosphate), LiBF₄ (lithium tetrafluoroborate), LiClO₄ (lithium perchlorate), LiAsF₆ (lithium hexafluoroarsenate), LiFSI (lithium bis(fluorosulfonyl)imide), LiTFSI (lithium bis(trifluoromethanesulfonyl)imide), LiTFS (lithium trifluoromethanesulfonate), LiDFOB (lithium difluoro(oxalato)borate), LiBOB (lithium bis(oxalato)borate), LiPO₂F₂ (lithium difluorophosphate), LiDFOP (lithium difluoro(oxalato)phosphate), and LiTFOP (lithium tetrafluoro(oxalato)phosphate). For example, the lithium salt includes one or more of LiPF₆ (lithium hexafluorophosphate), LiBF₄ (lithium tetrafluoroborate), LiBOB (lithium bis(oxalato)borate), LiDFOB (lithium difluoro(oxalato)borate), LiTFSI (lithium bis(trifluoromethanesulfonyl)imide), and LiFSI (lithium bis(fluorosulfonyl)imide).

The liquid electrolyte may optionally further include other additives, such as one or more of vinylene carbonate (VC), vinyl ethylene carbonate (VEC), fluoroethylene carbonate (FEC), difluoroethylene carbonate (DFEC), trifluoromethyl ethylene carbonate (TFPC), succinonitrile (SN), adiponitrile (ADN), glutaronitrile (GLN), hexanetricarbonitrile (HTN), 1,3-propane sultone (1,3-PS), ethylene sulfate (DTD), methylene methanedisulfonate (MMDS), 1-propene-1,3-sultone (PST), 4-methyl ethylene sulfate (PCS), 4-ethyl ethylene sulfate (PES), 4-propyl ethylene sulfate (PEGLST), propylene sulfate (TS), 1,4-butane sultone (1,4-BS), ethylene sulfite (DTO), dimethyl sulfite (DMS), diethyl sulfite (DES), cyclic quaternary ammonium sulfonate, tris(trimethylsilyl) phosphate (TMSP), and tris(trimethylsilyl) borate (TMSB), but is not limited thereto.

In some embodiments, the battery further includes a separator stacked between the positive electrode plate and the negative electrode plate. In some batteries, a separator is required to disposed for separating the positive electrode plate and the negative electrode plate, preventing free passage of electrons within the battery and avoiding short circuits between two electrodes, and allowing ions in the electrolyte to pass freely between the positive and negative electrodes.

The separator may be any known porous structure separator with electrochemical and mechanical stability, such as a single-layer or multilayer film of one or more of glass fiber, non-woven fabric, polyethylene (PE), polypropylene (PP), and polyvinylidene fluoride (PVDF).

The positive electrode plate and the negative electrode plate are alternately stacked, and the separator is disposed between the positive electrode plate and the negative electrode plate to provide isolation, forming a bare cell, or a bare cell may be obtained after winding. The cell is placed in a casing, the electrolyte is injected, and sealing is performed to obtain a battery cell. One or more battery cells are integrated to form a battery module, where the battery module can provide higher voltage and capacity and output specific functions. Then, one or more battery modules are installed in a battery box, typically with the addition of a battery management system, to form a battery pack, where the battery pack is typically a product provided to users. Alternatively, one or more battery cells can be directly installed in a box to form a battery pack.

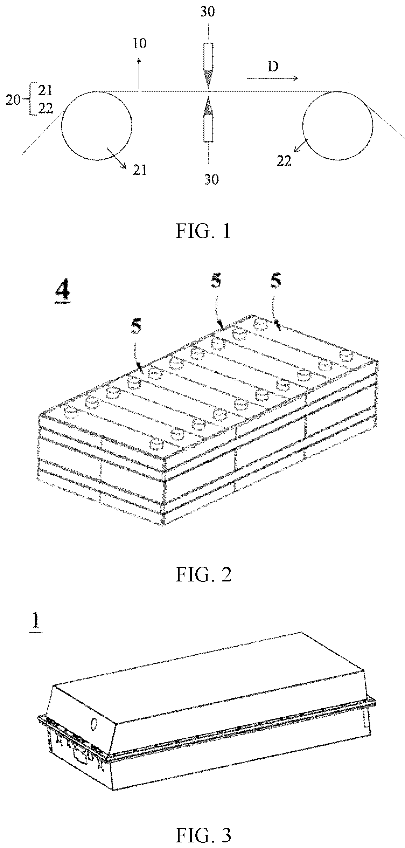

Referring to FIG. 2, a battery module 4 as an example is shown. In the battery module 4, a plurality of battery cells 5 may be arranged sequentially along a length direction of the battery module 4. Certainly, the plurality of battery cells 5 may alternatively be arranged in any other manner. Further, the plurality of battery cells 5 may be fastened through fasteners.

Optionally, the battery module 4 may further include a shell with an accommodating space, and the plurality of battery cells 5 are accommodated in the accommodating space.

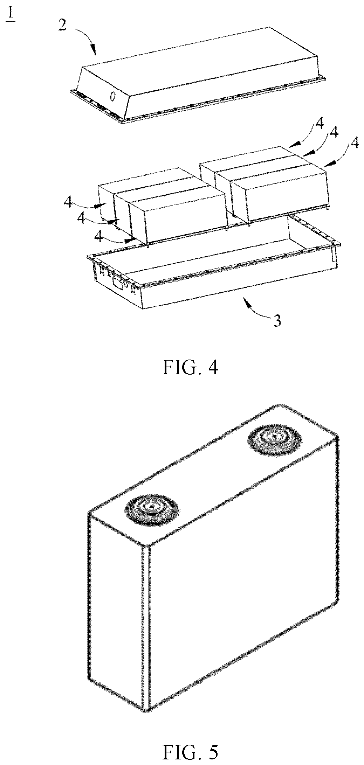

Referring to FIG. 3 and FIG. 4, a battery pack 1 as an example is shown. The battery pack 1 may include a battery box and a plurality of battery modules 4 arranged in the battery box. The battery box includes an upper box body 2 and a lower box body 3, where the upper box body 2 can cover the lower box body 3 to form an enclosed space for accommodating the battery modules 4. The plurality of battery modules 4 may be arranged in the battery box in any manner.

In some embodiments, the battery may include an outer package. The outer package may be used to encapsulate the electrode assembly composed of the positive electrode plate, the negative electrode plate, and the separator, as well as the electrolyte.

The outer package of the battery may be a hard shell, such as a hard plastic shell, an aluminum shell, or a steel shell. The outer package of the battery may alternatively be a soft pack, for example, a soft pouch. The material of the soft pack may be plastic, such as polypropylene, polybutylene terephthalate, or polybutylene succinate.

The shape of the battery may be cylindrical, prismatic, or any other shapes. For example, FIG. 5 shows a battery with a prismatic structure as an example.

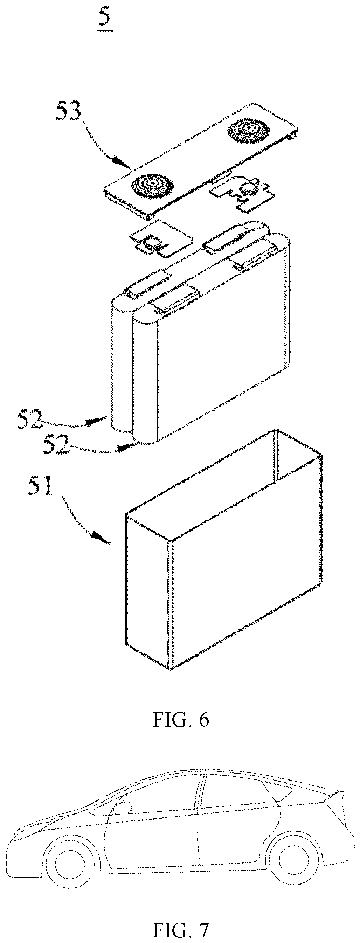

In some embodiments, referring to FIG. 6, the outer package may include a housing 51 and a cover plate 53. The housing 51 may include a base plate and side plates connected to the base plate, where the base plate and the side plates enclose an accommodating cavity. The housing 51 has an opening communicating with the accommodating cavity, and the cover plate 53 can cover the opening to enclose the accommodating cavity. The positive electrode plate, the negative electrode plate, and the separator may be formed into an electrode assembly 52 through a winding process or a stacking process. One or more electrode assemblies 52 are encapsulated in the accommodating cavity. The electrolyte infiltrates into the electrode assembly 52.

Embodiments of this application further provide an electric apparatus, where the electric apparatus includes the above-described battery.

The battery disclosed in the embodiments of this application can be used in electric apparatuses using batteries as power sources or in various energy storage systems using batteries as energy storage elements to provide electrical energy. Electric apparatuses may include but are not limited to mobile phones, tablet computers, notebook computers, electric toys, electric tools, electric bicycles, electric vehicles, ships, and spacecraft. Electric toys may include fixed or mobile electric toys, such as game consoles, electric toy cars, electric toy ships, and electric toy airplanes. Spacecraft may include airplanes, rockets, space shuttles, spaceships, and the like. For the electric apparatus, battery cells, battery modules, or battery packs in the battery can be selected based on usage requirements.

FIG. 7 shows an electric apparatus as an example. The electric apparatus is a battery electric vehicle, a hybrid electric vehicle, a plug-in hybrid electric vehicle, or the like. To satisfy requirements of the electric apparatus for high power and high energy density of a battery, a battery pack or a battery module may be used.

The following provides description with reference to specific embodiments.

### Example A1

This example provides an electrode plate processing system. Referring to FIG. 1, the electrode plate processing system includes:
a transfer unit 20 configured to transfer an electrode plate 10, where the transfer unit 20 includes an unwinding guide roller 21 and a winding guide roller 22; and
a flame heating unit 30, where the flame heating unit 30 includes a torch burner (hereinafter referred to as a torch); the torch uses natural gas (premixed with air) as a gas fuel to eject a premixed combustion flame and perform flame heating treatment on the electrode plate 10. The torch includes a torch nozzle, and a premixed natural gas-air mixture is combusted and then ejected as a premixed combustion flame through the torch nozzle. The dimensions of the torch nozzle are as follows: a width of 2-3 cm and a length 5-20 cm; and the dimensions of the torch nozzle can be adjusted based on the needs. Corresponding to the shape of the torch nozzle, the premixed combustion flame ejected from the torch nozzle has a rectangular cross-section, and the dimensions of the rectangular cross-section correspond to the dimensions of the torch nozzle. In the electrode plate heating system of this example, two torches with identical combustion conditions are provided and positioned equidistantly on both sides of the surface of the electrode plate 10, and the premixed combustion flames produced by the two torches are perpendicular to the surface of the electrode plate 10.

The electrode plate processing system of this example further includes: a drying unit, a rolling unit, a cooling unit, and a temperature measurement unit (the drying unit, the rolling unit, the cooling unit, and the temperature measurement unit are not shown in FIG. 1). The drying unit, the rolling unit, the flame heating unit 30, and the cooling unit are arranged sequentially along an electrode plate transferring direction (a direction D in FIG. 1).

The drying unit is configured to perform drying treatment on an electrode plate coated with an electrode slurry, the rolling unit performs rolling on the electrode plate treated by the drying unit, and the cooling unit cools the electrode plate after flame heating treatment to facilitate winding of the electrode plate 10 by the winding guide roller 22. The temperature measurement unit measures the temperature of the electrode plate 10 during the flame heating treatment.

In this example, the electrode plate processing system further includes an automatic temperature control unit (not shown in FIG. 1), where the automatic temperature control unit is configured to control the combustion conditions of the torch based on the temperature of the electrode plate 10 measured by the temperature measurement unit.

An operation process of the electrode plate processing system of this example includes:
applying the electrode slurry onto a current collector, performing drying through the drying unit, and performing rolling through the rolling unit to form an electrode plate 10 with a dried active layer. The electrode plate 10 is transferred by the transfer unit 20 to rapidly pass through the flame produced by the torch, thereby achieving flame heating treatment of the electrode plate 10.

During the flame heating treatment, the temperature measurement unit monitors the temperature of the electrode plate 10 in a timely manner; meanwhile, the automatic temperature control unit receives temperature data of the electrode plate 10 measured by the temperature measurement unit and adjusts the combustion conditions of the torch based on this data, maintaining the temperature of the electrode plate 10 within the required range.

### Example B1

This example provides a method for processing a positive electrode plate, performed in the electrode plate processing system of Example A1 for processing the positive electrode plate, specifically including the following steps:

### (1) Preparation of positive electrode plate

Nickel cobalt manganese (NCM) ternary material, conductive agent carbon black, polyvinylidene fluoride (PVDF), and N-methylpyrrolidone (NMP) are mixed at a mass ratio of 96.9:2:1:21 and stirred well to obtain a positive electrode slurry; and the positive electrode slurry is then uniformly applied onto a positive electrode current collector aluminum foil, followed by drying, cold pressing, and slitting to obtain the positive electrode plate.

### (2) Flame heating treatment of positive electrode plate

The obtained positive electrode plate is subjected to flame heating treatment using the electrode plate processing system shown in FIG. 1. During the treatment, a premixed combustion flame produced by the torch is in contact with the positive electrode plate; in the torch, an air flow rate is 250 L/min, a natural gas flow rate is 6 L/min, an air-fuel ratio is 3, and a flame temperature is 600°C; and a traveling speed of the electrode plate is controlled at 100 m/min. The temperature of the electrode plate during traveling and carbon deposition on the surface of the electrode plate are recorded.

### Example B2

This example provides a method for processing a positive electrode plate. This example is the same as Example B1 except that in step (2), the traveling speed of the electrode plate is controlled at 80 m/min.

### Example B3

This example provides a method for processing a positive electrode plate. This example is the same as Example B1 except that in step (2), the traveling speed of the electrode plate is controlled at 60 m/min.

### Example B4

This example provides a method for processing a positive electrode plate. This example is the same as Example B1 except that in step (2), the traveling speed of the electrode plate is controlled at 40 m/min.

### Comparative example B1

This comparative example provides a method for processing a positive electrode plate. This comparative example is the same as Example B1 except that the positive electrode plate is not subjected to the flame heating treatment of step (2).

### Comparative example B2

This comparative example provides a method for processing a positive electrode plate. This comparative example is the same as Example B1 except that in step (2), the traveling speed of the electrode plate is controlled at 10 m/min.

In this comparative example, the electrode plate is burned and broken during the treatment process.

### Comparative example B3

This comparative example provides a method for processing a positive electrode plate. This comparative example is the same as Example B1 except that the torch is replaced with an alcohol lamp, a temperature of the flame (outer flame) of the alcohol lamp is 400°C, and the traveling speed of the electrode plate is controlled at 10 m/min.

In this comparative example, the combustion of the alcohol lamp belongs to diffusion combustion, forming a flame clearly divided into a flame core, inner flame, and outer flame. With consideration that the flame temperature of the alcohol lamp is low, during the processing of the positive electrode plate, the traveling speed of the electrode plate is controlled at a low speed of 10 m/min to increase the contact time between the electrode plate and the flame, thereby increasing the temperature of the electrode plate during the flame heating treatment.

### Example C1

This example provides a method for processing a negative electrode plate, performed in the electrode plate processing system of Example A1 for processing the negative electrode plate, specifically including the following steps:

### (1) Preparation of negative electrode plate

Active material artificial graphite, conductive agent carbon black, binder styrene-butadiene rubber (SBR), and thickener sodium carboxymethyl cellulose (CMC) are dissolved in deionized water solvent at a mass ratio of 96.2:0.8:0.8:1.2, and mixed well to prepare a negative electrode slurry; and the negative electrode slurry is applied once or multiple times uniformly onto a negative electrode current collector copper foil, followed by drying, cold pressing, and slitting to obtain the negative electrode plate.

### (2) Flame heating treatment of negative electrode plate

The obtained negative electrode plate is subjected to flame treatment using the processing system shown in FIG. 1. During the treatment, a premixed combustion flame produced by the torch is in contact with the negative electrode plate; in the torch, an air flow rate is 180 L/min, a natural gas flow rate is 6 L/min, an air-fuel ratio is 4, and a flame temperature is 800°C; and the traveling speed of the electrode plate is controlled at 100 m/min, and the temperature of the electrode plate during traveling and carbon deposition on the surface of the electrode plate are recorded.

### Example C2

This example provides a method for processing a negative electrode plate. This example is the same as Example C1 except that in step (2), the traveling speed of the electrode plate is controlled at 80 m/min.

### Example C3

This example provides a method for processing a negative electrode plate. This example is the same as Example C1 except that in step (2), the traveling speed of the electrode plate is controlled at 60 m/min.

### Example C4

This example provides a method for processing a negative electrode plate. This example is the same as Example C1 except that in step (2), the traveling speed of the electrode plate is controlled at 40 m/min.

### Comparative example C1

This comparative example provides a method for processing a negative electrode plate. This comparative example is the same as Example C1 except that the negative electrode plate is not subjected to the flame heating treatment of step (2).

### Comparative example C2

This comparative example provides a method for processing a positive electrode plate. This comparative example is the same as Example C1 except that in step (2), the traveling speed of the electrode plate is controlled at 10 m/min.

In this comparative example, the electrode plate is burned and broken during the treatment process.

The processing conditions of the electrode plates of examples and comparative examples are shown in Table 1, and the electrode plate temperatures (specifically temperatures of active layers) and carbon deposition of examples and comparative examples during the treatment process are shown in Table 2. Specifically, the "surface layer temperature of active layer" in Table 2 refers to the surface layer temperature of the active layer approximately 6 cm downstream of a region heated by flame (that is, a surface layer temperature of the electrode plate). The surface layer temperature of the active layer approximately 6 cm downstream is selected for ease of temperature measurement. In addition, since this region is very close to the region heated by flame, so the measured temperature can be considered to be the same as the surface layer temperature of the active layer during the flame heating treatment.

Performance tests were conducted on the electrode plates processed in examples and comparative examples, including the electrolyte absorption velocity for the electrolyte, the porosity, the sheet resistance, the adhesion strength, and the like, with results shown in Table 3 below.

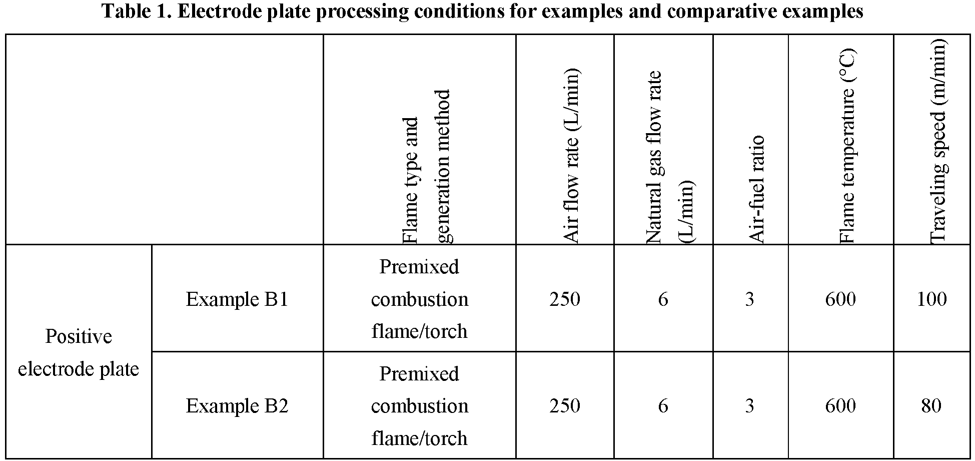

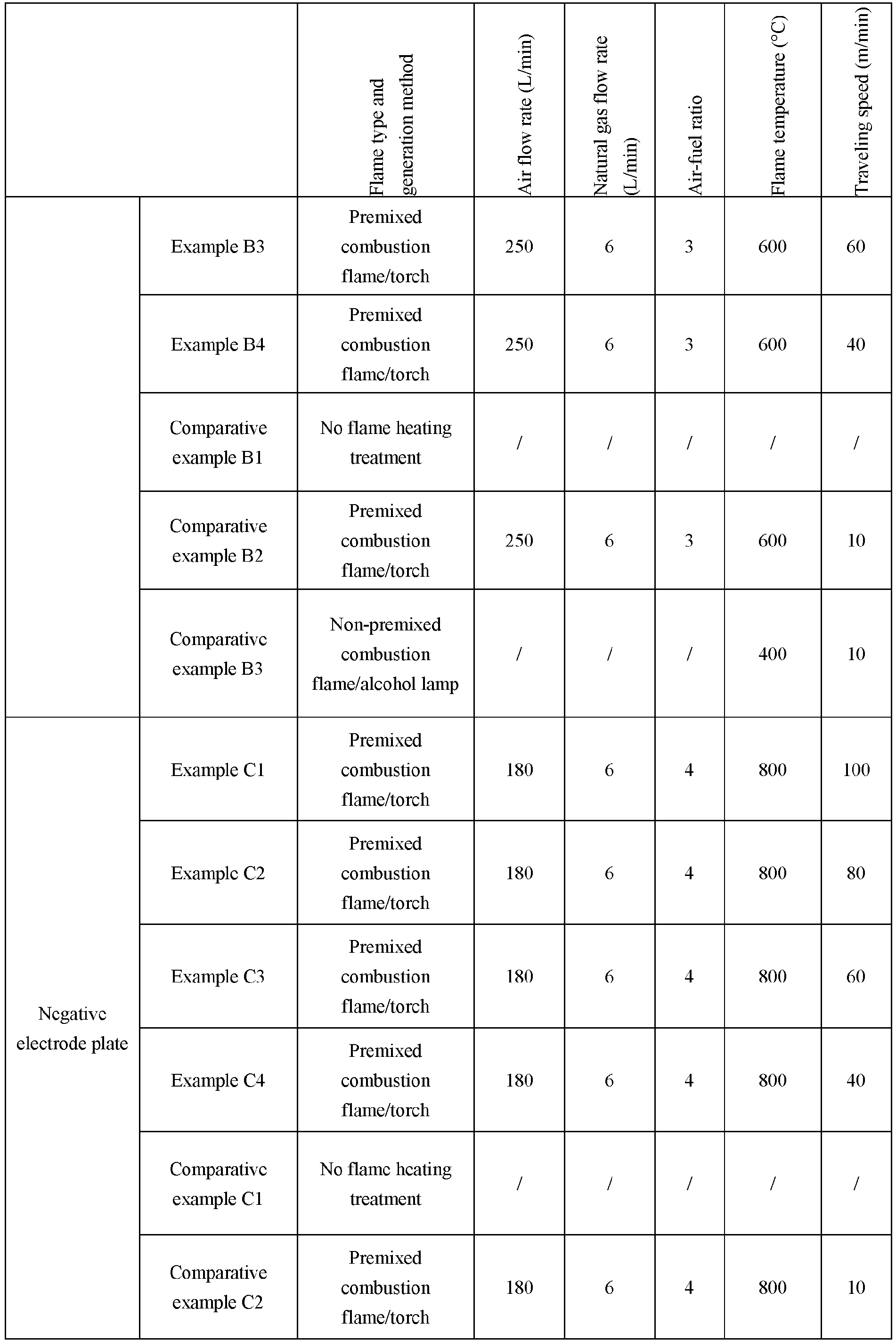

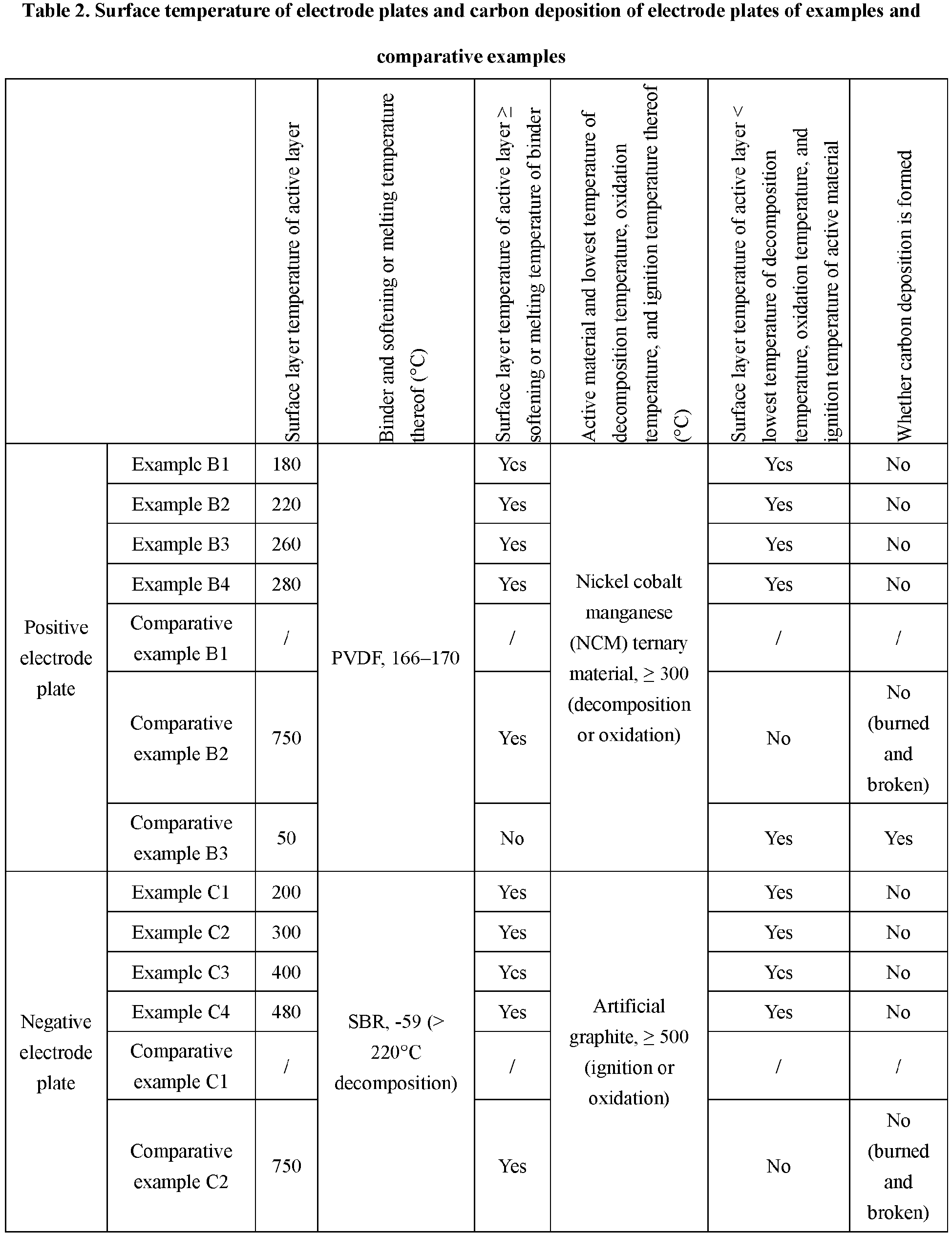

**Table 3. Electrode Plate Performance Test Results**

| | | Electrolyte absorption velocity (µg/s) | Porosity (%) | Sheet resistance (Ω) | Adhesion strength (N/m) |
|---|---|---|---|---|---|
| Positive Electrode Plate | Example B1 | 0.31 | 37.2 | 0.001965 | / |
| | Example B2 | 0.45 | 45.1 | 0.001645 | 18.2 |
| | Example B3 | 0.46 | 44.2 | 0.001776 | / |
| | Example B4 | 0.41 | 46.1 | 0.001729 | / |
| | Comparative example B1 | 0.23 | 31.2 | 0.002343 | 18.1 |
| | Comparative example B2 | Electrode plate was burned and broken | | | |
| | Comparative example B3 | 0.24 | 30.8 | 0.002356 | / |
| Negative electrode plate | Example C1 | 9.61 | 30.5 | 0.4272 | 22.6 |
| | Example C2 | 10.88 | 32.8 | 0.4056 | / |
| | Example C3 | 11.21 | 33.4 | 0.3986 | / |
| | Example C4 | 10.93 | 31.8 | 0.4032 | / |
| | Comparative example C1 | 8.11 | 26.7 | 0.4647 | 22.5 |
| | Comparative example C2 | Electrode plate was burned and broken | | | |

The data in Table 3 were processed to obtain the change rates of various performance of the electrode plates after treatment in examples and comparative examples compared to untreated electrode plates, as shown in Table 4 below.

**Table 4. Performance change rates of electrode plates of examples and comparative examples**

| | | Electrolyte absorption velocity change rate (%) | Porosity change rate (%) | Sheet resistance change rate (%) | Adhesion strength change rate (%) |
|---|---|---|---|---|---|
| Positive electrode plate | Example B1 | 34.78 | 19.23 | -16.13 | / |
| | Example B2 | 95.65 | 44.55 | -29.79 | 0.55 |
| | Example B3 | 100.00 | 41.67 | -24.20 | / |
| | Example B4 | 78.26 | 47.76 | -26.21 | / |
| | Comparative example B1 | 0.00 | 0.00 | 0.00 | 0.00 |
| | Comparative example B2 | / | | | |
| | Comparative example B3 | 4.35 | -1.28 | 0.55 | / |
| Negative electrode plate | Example C1 | 18.50 | 14.23 | -8.07 | 0.44 |
| | Example C2 | 34.16 | 22.85 | -12.72 | / |
| | Example C3 | 38.22 | 25.09 | -14.22 | / |
| | Example C4 | 34.77 | 19.10 | -13.23 | / |
| | Comparative example C1 | 0.00 | 0.00 | 0.00 | 0.00 |
| | Comparative example C2 | / | | | |

In Table 4, the change rates in Examples B1 to B4 and Comparative examples B1 to B3 are relative to the change rate in Comparative example B1, and the change rates in Examples C1 to C4 and Comparative examples C1 and C2 are relative to the change rate in Comparative example C1.

Examples are described below. Electrolyte absorption velocity change rate of electrode plate of Example B1 = (electrolyte absorption velocity of electrode plate of Example B1 - electrolyte absorption velocity change rate of electrode plate of Comparative example B1) / electrolyte absorption velocity change rate of electrode plate of Comparative example B1 * 100%. Electrolyte absorption velocity change rate of electrode plate of Example B2 = (electrolyte absorption velocity of electrode plate of Example B2 - electrolyte absorption velocity change rate of electrode plate of Comparative example B1) / electrolyte absorption velocity change rate of electrode plate of Comparative example B1 * 100%. Electrolyte absorption velocity change rate of electrode plate of Example C1 = (electrolyte absorption velocity of electrode plate of Example C1 - electrolyte absorption velocity change rate of electrode plate of Comparative example C1) / electrolyte absorption velocity change rate of electrode plate of Comparative example C1 * 100%. Electrolyte absorption velocity change rate of electrode plate of Example C2 = (electrolyte absorption velocity of electrode plate of Example C2 - electrolyte absorption velocity change rate of electrode plate of Comparative example C1) / electrolyte absorption velocity change rate of electrode plate of Comparative example C1 * 100%.

Change rates for other items are calculated in the same method.

Test results are shown below.

After the flame heating treatment under appropriate conditions, the electrode plates of Examples B1 to B4 and Examples C1 to C4 exhibit significant improvements in the electrolyte absorption velocities compared to those before the flame heating treatment. Increase rates of the electrolyte absorption velocities of the positive electrode plates in Examples B1 to B4 after the flame heating treatment reach 34% or higher, even up to 100%. Increase rates of the electrolyte absorption velocities of the negative electrode plates in Examples C1 to C4 after the flame heating treatment reach 18% or higher. The significant increase in the electrolyte absorption velocity indicates that the electrolyte infiltration for the electrode plate is significantly improved after the electrode plate is subjected to the flame heating treatment.

Combined with the change in the porosity of the electrode plate, one reason for the increased electrolyte absorption velocity of the electrode plate is that the porosity of the electrode plate increases after the flame heating treatment. The increase in the porosity is mainly because the binder that floats to the surface of the electrode plate is heated to be softened (melted) or ablated during the flame heating treatment, exposing more capillary pores in the electrode plate and increasing the channels for electrolyte infiltration for the electrode plate. Moreover, the torch is used to produce the premixed combustion flame during flame combustion treatment, so that no carbon deposition is formed on the surface of the electrode plate and the pores are not blocked (for example, a test performed by X-ray energy dispersive spectrometer (EDS) on the negative electrode plate of Comparative example 1 indicates that the amount of C is 99.19wt% and the amount of oxygen is 0.81wt%; in contrast, after the negative electrode plate of Example C3 is subjected to the flame heating treatment, no carbon deposition is observed on the appearance, and the EDS test indicates that the amount of C is 99.22wt% and the amount of oxygen is 0.78wt%, comparable to those before the flame heating treatment). This is conducive to further increasing the porosity of the electrode plate. Therefore, in Examples B1 to B4 and Examples C1 to C4, appropriate flame heating treatment is performed on the electrode plate, so that the porosity of the electrode plate can be effectively increased, thereby improving the electrolyte infiltration for the electrode plate.

Meanwhile, corresponding to the porosity of the electrode plate, within a certain range, as the porosity of the electrode plate increases, the sheet resistance of the electrode plate gradually decreases. For example, after the flame heating treatment, the positive electrode plates in Examples B1 to B4 exhibit a sheet resistance reduction rate of 16% or higher compared to that before the flame heating treatment, with a maximum reduction rate approaching 30%. After the flame heating treatment, the negative electrode plates in Examples C1 to C4 exhibit a sheet resistance reduction rate of 8% or higher compared to that before the flame heating treatment, with a maximum reduction rate approaching 15%. The sheet resistance of the electrode plate is influenced by the surface morphology of the electrode plate. After the flame heating treatment under a specified condition, the surface morphology of the electrode plate changes, such as an increase in porosity. This not only improves the electrolyte infiltration for the electrode plate but also significantly reduces the sheet resistance of the electrode plate, improving the electrochemical performance of the electrode plate.

Additionally, test results show that after the flame heating treatment under appropriate conditions, the electrode plate still maintains good adhesion strength.

In contrast, after the flame heating treatment on the electrode plate under inappropriate conditions, for example, after the flame heating treatment, the surface temperature of the electrode plate in each of Comparative examples B2 and C2 is too high (higher than the lowest temperature of the decomposition temperature, oxidation temperature, and ignition temperature of the active material in the electrode plate), resulting in the electrode plate being burned and broken. For another example, after the flame heating treatment, the surface temperature of the electrode plate in Comparative example B3 is too low (lower than the softening or melting temperature of the active material in the binder), resulting in a minimal change rate in the electrolyte absorption velocity of the electrode plate compared to that before the flame heating treatment; meanwhile, the porosity is reduced compared to that of the electrode plate without the flame heating treatment, and the sheet resistance is improved.

In summary, during the flame heating treatment of the electrode plate, controlling the temperature of the electrode plate within a specified range can effectively increase the porosity of the electrode plate, thereby improving the electrolyte infiltration for the electrode plate and contributing to reducing the sheet resistance of the electrode plate.

Appendix: The relevant performance test methods are described below.

### (1) Electrolyte absorption velocity of electrode plate

An electrode plate was fixed on a clean glass plate, and a capillary tube with an inner diameter of 0.2 mm was used to suck a 3 mm height of electrolyte (the electrolyte composition included EC, DMC, and EMC at a volume ratio of 3:2:1, and 1 mol/L lithium salt LiPF₆). The capillary tube was brought into vertical contact with the electrode plate to allow the electrode plate to absorb the electrolyte, and the time taken to absorb the electrolyte completely was measured. The electrolyte absorption velocity was obtained through conversion.

### (2) Porosity of electrode plate

In a drying room, more than 20 circular electrode plates with good appearance and no powder shedding at the edges were selected using tweezers and placed into a sample cup. The number of the electrode plates was recorded, and the apparent volumes of all electrode plates were calculated. The sample cup containing the samples was placed in a true density tester, and a test system was sealed. Helium gas was introduced according to the procedure, and the pressure of the gas in a sample chamber and an expansion chamber was detected. The true volumes of all electrode plates were calculated based on Boyle's law (PV = nRT), and the porosity of the sample under test was obtained [porosity = (V₀ - V) / V * 100%, where V₀ was the apparent volume of the electrode plate, and V was the true volume of the electrode plate].

### (3) Sheet resistance

The sheet resistance was tested using a sheet resistance tester from Initial Energy Science & Technology Co., Ltd. Small discs with a diameter of 10 mm were cut from the left, middle, and right parts of the electrode plate. An indicator light of an electrode plate resistance tester from Initial Energy Science & Technology Co., Ltd. was turned on, and the disc was placed in an appropriate position of a "probe" of the sheet resistance tester. The "start" button was clicked, and the reading was recorded once it was stable. Each small disc was tested at two positions, and finally, the average of the six measurements was calculated to obtain the sheet resistance of the electrode plate.

### (4) Adhesion strength

An electrode plate was cut into a test sample with dimensions of 20 * 100 mm² for later use. A test side of the sample was adhered with a double-sided tape and pressed with a roller to ensure complete adhesion between the double-sided tape and the sample. The other side of the double-sided tape on the sample was adhered to a stainless steel surface, and one end of the sample was bent backward at a bending angle of 180°. A GOTECH tensile machine was used for testing. The stainless steel end was fixed to a lower fixture of the tensile machine, and the bent end of the sample was fixed to the upper fixture. The angle of the sample was adjusted to ensure that the upper and lower ends were located at vertical positions. The sample was then stretched at a speed of 50 mm/min until the sample was completely peeled from the substrate. A displacement and an acting force during the process were recorded, and the force at equilibrium was typically considered as the adhesion strength of the electrode plate.

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. All such modifications and equivalent replacements shall fall within the scope of the claims and specification of this application. In particular, as long as there is no structural conflict, the various technical features mentioned in the implementations can be combined in any manner. This application is not limited to the specific embodiments disclosed in this specification but includes all technical solutions falling in the scope of the claims.

## Claims

1. An electrode plate processing system, **characterized by** comprising: a flame heating unit, wherein the flame heating unit is configured to perform flame heating treatment on an electrode plate.

2. The electrode plate processing system according to claim 1, **characterized in that** the flame heating unit generates flames positioned on two opposite sides of a surface of the electrode plate.

3. The electrode plate processing system according to claim 1 or 2, **characterized in that** the flame heating unit comprises a flameless gas burner.

4. The electrode plate processing system according to any one of claims 1 to 3, **characterized in that** the electrode plate processing system further comprises a transfer unit, wherein the transfer unit is configured to transfer the electrode plate.

5. A method for processing an electrode plate, **characterized in that** the electrode plate comprises an active layer, wherein the active layer comprises an active material and a binder; and the method for processing an electrode plate comprises: performing flame heating treatment on the electrode plate, such that a surface layer temperature of the active layer is greater than or equal to a softening temperature or a melting temperature of the binder and less than the lowest temperature of a decomposition temperature, an oxidation temperature, and an ignition temperature of the active material.

6. The method for processing an electrode plate according to claim 5, **characterized in that** a flame used in the flame heating treatment comprises a premixed combustion flame.

7. The method for processing an electrode plate according to claim 6, **characterized in that** a temperature of the premixed combustion flame is 500-1200°C, optionally 600-1000°C.

8. The method for processing an electrode plate according to claim 6 or 7, **characterized in that** the premixed combustion flame is generated by a flameless gas burner, wherein the flameless gas burner comprises any one or more of the following technical parameters:
(1) an air flow rate of 50-250 L/min, optionally 80-150 L/min;
(2) a gas fuel flow rate of 2-15 L/min, optionally 5-10 L/min; and
(3) an air-fuel ratio of 1-7, optionally 3-5.

9. The method for processing an electrode plate according to any one of claims 5 to 8, **characterized in that** during the flame heating treatment step, the electrode plate moves relative to the flame.

10. The method for processing an electrode plate according to claim 9, **characterized in that** a movement speed of the electrode plate relative to the flame is 40-100 m/min, optionally 60-80 m/min.

11. The method for processing an electrode plate according to any one of claims 5 to 10, **characterized in that** the surface layer temperature of the active layer is 180-500°C, optionally 300-500°C.

12. An electrode plate, **characterized in that** a porosity of the electrode plate is 300/0-50%, optionally 30%-47%.

13. The electrode plate according to claim 12, **characterized in that** the electrode plate comprises any one or more of the following technical parameters:
(1) an electrolyte absorption velocity of 0.3 µg/s-12 µg/s;
(2) a sheet resistance of 0.001 Ω-0.43 Ω; and
(3) adhesion strength of 18-23 N/m.

14. The electrode plate according to claim 12 or 13, **characterized in that**
the electrode plate comprises a positive electrode plate, wherein the positive electrode plate has a porosity of 350/0-50%, an electrolyte absorption velocity of 0.3 µg/s-0.5 µg/s, a sheet resistance of 0.0016 Ω-0.002 Ω, and adhesion strength of 18-20 N/m; or
the electrode plate comprises a negative electrode plate, wherein the negative electrode plate has a porosity of 300/0-35%, an electrolyte absorption velocity of 9 µg/s-12 µg/s, a sheet resistance of 0.39 Ω-0.43 Ω, and adhesion strength of 20-23 N/m.

15. The electrode plate according to any one of claims 12 to 14, **characterized in that** the electrode plate is obtained by processing through the method for processing an electrode plate according to any one of claims 5 to 11.

16. A battery, **characterized by** comprising the electrode plate according to any one of claims 12 to 15.

17. An electric apparatus, **characterized by** comprising the battery according to claim 16.
